Europäisches Patentamt

European Patent Office

Office européen des brevets

(11) Publication number: **0 443 642 A2**

# EUROPEAN PATENT APPLICATION

(21) Application number: 91200115.3

(51) Int. Cl.5: **B01D 63/10**

(22) Date of filing: 21.01.91

(30) Priority: 24.01.90 NL 9000169

(43) Date of publication of application:
28.08.91 Bulletin 91/35

(84) Designated Contracting States:
BE DE FR GB IT NL

(71) Applicant: SHELL INTERNATIONALE
RESEARCH MAATSCHAPPIJ B.V.
Carel van Bylandtlaan 30
NL-2596 HR Den Haag(NL)

(72) Inventor: **Last, Thijme**
**Badhuisweg 3**
**NL-1031 CM Amsterdam(NL)**
Inventor: **den Boestert, Johannes Leendert**
**Willem Cornelis**
**Badhuisweg 3**
**NL-1031 CM Amsterdam(NL)**

(74) Representative: **Spierenburg, Jan et al**
**Shell Internationale Research Maatschappij**
**B.V. Patents, Licensing & Trade Marks**
**Division P.O. Box 302**
**NL-2501 CH 's-Gravenhage(NL)**

(54) Process for the fabrication of a spirally wound membrane module.

(57) A method of manufacturing a spirally wound membrane module. A conventional method consists of wrapping the membrane envelope (with the feed and permeate spacers) around a permeate tube. The sealing of the envelope is achieved by applying a suitable adhesive on the formeate tube and around the edges of the membrane envelope before being rolled to form a spirally wound module. The present method avoids the application of the adhesive before rolling the module. In fact, the module manufacture is the same except that no adhesive is applied and the module is rolled as before. The sealing of the module is achieved by "potting" the two ends of the rolled module. The feed spacer is kept free of adhesive by protecting the spacer by the use of a masking tape which is machined out once the potting agent is dry.

FIG.1

## PROCESS FOR THE FABRICATION OF A SPIRALLY WOUND MEMBRANE MODULE

The present invention relates to a process for the fabrication of a spirally wound membrane module, as well as to such a membrane obtained according to the process.

Such membranes are used for separating gases and liquids.

Solvent-resistant membrane modules are particularly important for the development of membrane applications in petroleum and petrochemical processes. Spirally wound membrane modules are known per se.

Such a module consists of a membrane envelope (two membranes enclosing a permeate spacer), which, together with a feed spacer, is spirally wound around a central permeate collecting tube. In order to keep the feed stream and the permeate separate from each other the envelope is closed by means of a glued edge. The ends of the module are provided with anti-telescoping means, which ensure that the module does not telescope during operation.

During the fabrication of modules in the conventional manner, the membrane envelope is glued tight while being rolled up. A firm filling adhesive is used for this purpose.

This method has a number of drawbacks, viz.:

- while rolling up the module no corrections can be made without damaging the membrane. This implies a limited manipulability;
- the choice of a suitable adhesive is limited (viscosity, filling properties and chemical resistance).

The process according to the invention overcomes these drawbacks and the invention therefore provides a process for the fabrication of a spirally wound membrane module consisting of a membrane envelope (i.e. two membranes, enclosing a permeate spacer), which, together with a feed spacer, is spirally wound around a central permeate collecting tube, the envelope being closed by means of a glued edge, and the permeate spacer being wrapped one turn around the permeate collecting tube and laid on a flat surface, the membrane being folded around the feed spacer such that the selective layer rests on said spacer, this package subsequently being laid on the permeate spacer, the spacers and membrane being rolled up firmly, thereby producing a closed membrane envelope, characterized in that the feed spacer is provided at both edges with a strip of tape which is folded around said spacer or a subsequently removable filler, the envelope only being glued tight at the end, and the envelope finally being closed by potting the edges of the module.

As a subsequently removable filler, paraffin wax can, for example, be used.

Improvement of the known method is now achieved by gluing the membrane envelope after the rolling-up operation (potting method). This results in better manipulability during fabrication and a wider choice in the type of adhesive (especially low-viscosity, chemically resistant epoxy resins). This development is essential for, for example, the application of membranes in the "AC dope" process in which an engine oil dope is manufactured in a xylene solvent environment, and in solvent recovery in luboil dewaxing.

Moreover, it is easier to make a leak-free module in this way and the anti-telescoping means can be moulded in at the same time.

The invention will now be described by way of example in more detail with reference to the accompanying drawings, in which:

Fig. 1 shows schematically the concept of a spirally wound membrane module;

Figs. 2a and 2b show schematically the fabrication of a spirally wound membrane module according to a conventional process;

Figs. 3a and 3b show schematically the fabrication of a spirally wound membrane module according to the first phase of the process of the invention; and

Figs. 4a-d show cross-sections of the membrane module during the subsequent steps (potting) of the process according to the invention.

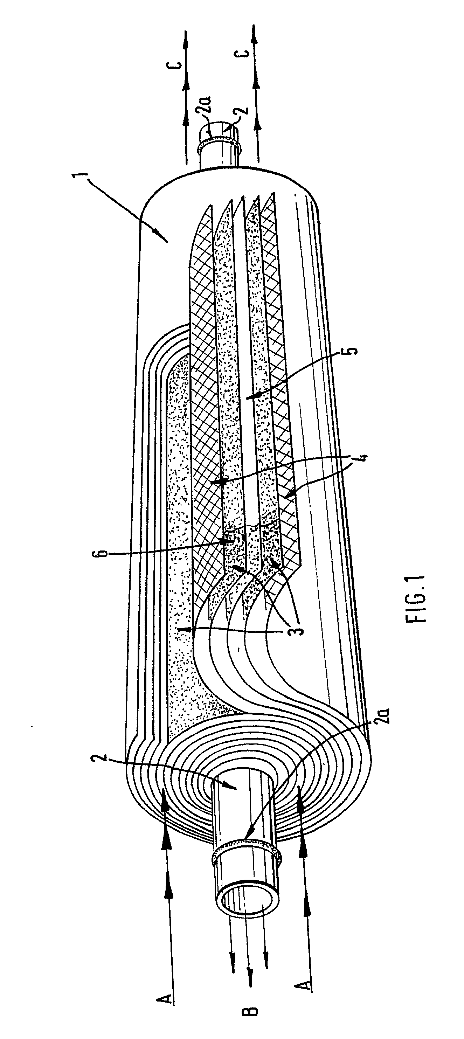

With reference to Fig. 1, a cut-away view of a spirally wound membrane module is shown.

The feed stream is supplied from direction A, the concentrate stream leaves at C, while the permeate stream leaves at B via the permeate collecting tube 2. If desired, O-rings 2a may be provided at the ends. The spiral module 1 further consists of a number of membranes 3 that are separated from each other by a mesh spacer (feed spacer) 4. A permeate spacer 5 is also present. The edges of the membranes 3 are provided with a sealing (glued) edge 6.

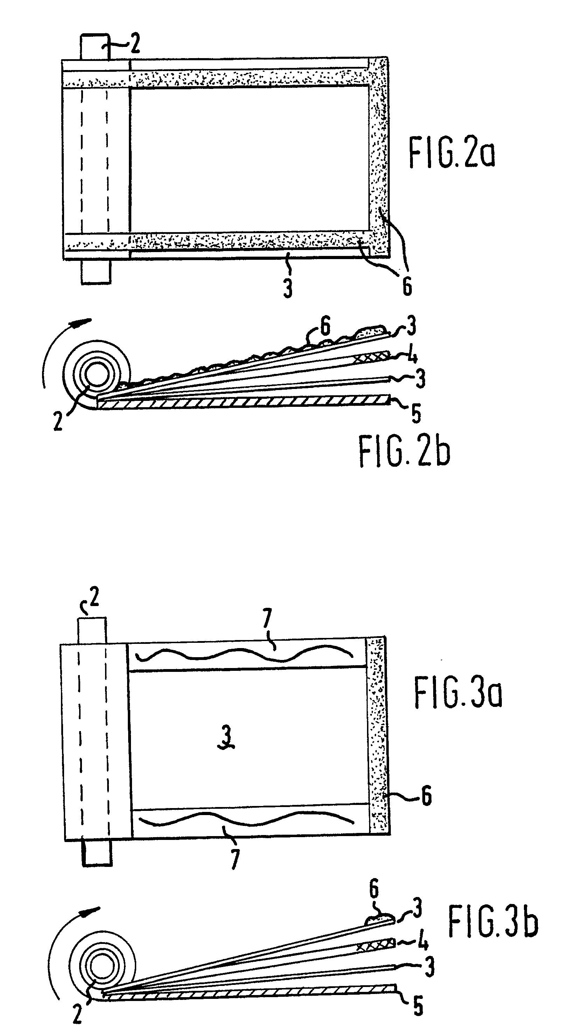

With reference to Figs. 2a (top view) and 2b (side view), the fabrication of a spirally wound module in the conventional manner is shown. The permeate spacer 5 is wrapped one turn around the permeate collecting tube 2 and laid on a flat surface. The membrane 3 is folded around the feed spacer 4 such that the selective layer rests on said spacer. This package is laid on the permeate spacer 5. The two edges and

2

the end of the above-lying piece of membrane are provided with an approx. 1 cm wide glued edge 6. The spacers and membrane are then rolled up firmly, thus producing a closed membrane envelope. When the adhesive has dried, the edges of the module are cut off at right angles and provided with the anti-telescoping means.

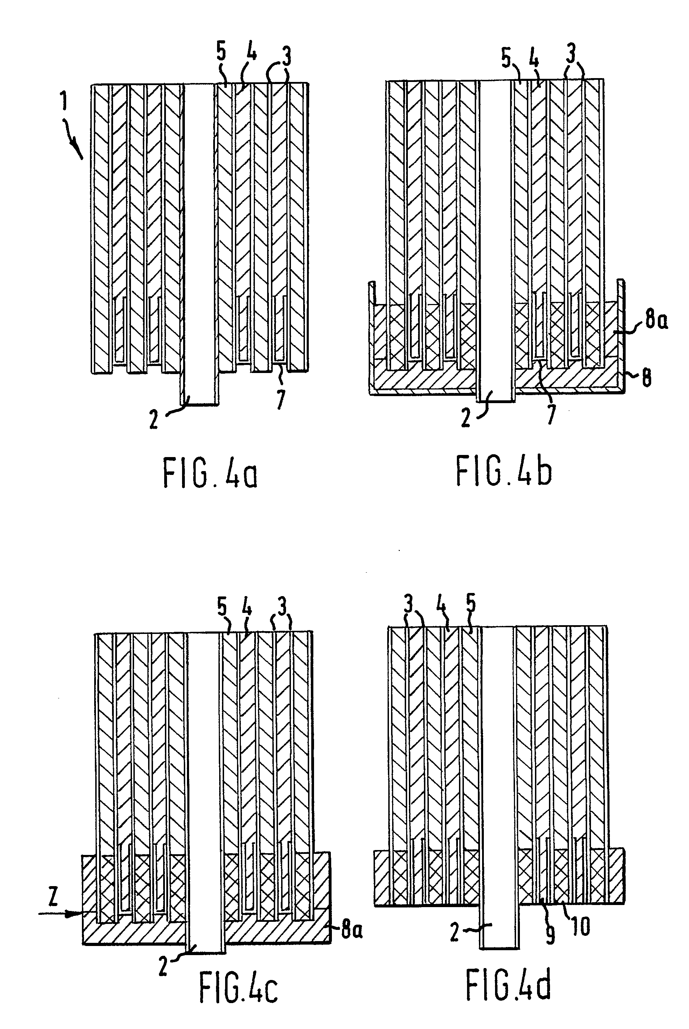

The fabrication of a module by the potting method according to the invention (Fig. 3a (top view) and 3b (side view)) is similar to the above-mentioned known method, except that:
- the feed spacer 4 is provided at both edges with an approx. 3 cm wide strip of tape or a subsequently removable filler 7 (shown in figs. 3a and 4a);
- no adhesive is applied along the edges. The envelope is, however, glued tight at the end.

After rolling up, a module has here been formed whose envelope has still to be closed. This is achieved by potting the edges of the module. Fig. 4a shows the rolled-up module, the feed spacer 4 being provided with a tape or filler 7. The module is placed in a mould 8 (Fig. 4b) which is filled with a suitable adhesive or resin (potting agent 8a) which impregnates the membrane material and permeate spacer but is prevented by the tape from filling the feed spacer. After the adhesive has hardened, the mould is removed (Fig. 4c) and about 1 cm of the bottom of the module is cut off (along direction Z), which opens the feed spacer (Fig. 4d). The reference number 9 indicates the open feed spacer, while reference number 10 indicates the closed permeate spacer.

The following table A gives experimental results obtained with spirally wound modules fabricated by the conventional method and by the potting method according to the invention:

Table A

| Module No. | Method | measuring temperature (°C) | membrane pressure (bar) | permeability P/l CO$_2$ ($m^3/m^2$.day.bar) | P/l N$_2$ | CO$_2$/N$_2$ selectivity |
|---|---|---|---|---|---|---|
| I | conventional method | 20 | 1.0 | 88.0 | 15.7 | 5.6 |
| II | | 20 | 1.0 | 86.3 | 11.8 | 7.3 |
| III | | 20 | 1.0 | 67.6 | 10.1 | 6.7 |
| IV | | 20 | 1.0 | 60.6 | 5.9 | 10.2 |
| V | | 20 | 1.0 | 77.2 | 16.4 | 4.7 |
| VI | potting method | 20 | 1.0 | 123.0 | 76.9 | 1.6 |
| VII | | 20 | 1.0 | 44.3 | 4.3 | 10.4 |
| VIII | | 20 | 1.0 | 55.0 | 5.2 | 10.5 |
| IX | | 20 | 1.0 | 52.9 | 5.2 | 10.2 |
| X | | 20 | 1.0 | 46.0 | 4.3 | 10.6 |

The spirally wound membrane modules had the following specifications:
- module dimensions:
  width 290 mm, diameter 50 mm, length of membrane envelope 550 mm, membrane area 0.25 m$^2$;
- membrane material:
  porous polypropylene on a non-woven backing material, pore size 0.2 * 0.02 $\mu$m, porosity 40%, provided with an approx. 1.5 $\mu$m thick polydimethylsiloxane top layer (PDMS).
  $CO_2$ permeability 50-75 m$^3$/m$^2$.day.bar, $CO_2$/N$_2$ selectivity > 10;
- permeate collecting tube:
  Stainless steel AISI-316 length 400 mm, diameter 19 mm;
- spacer material:

4

feed spacer material polypropylene gauze, permeate spacer material polypropylene gauze.

After the five modules were fabricated according to the two methods, they were tested by means of permeability measurements with $N_2$ and $CO_2$. The test results are given in Table A. The specific $CO_2$ permeability (P/I) of the membrane materials used varied between 50 and 75 $m^3/m^2$.day.bar, the $CO_2/N_2$ selectivity was > 10; this means that a perfect module should meet these specifications.

The conventional modules were fabricated with a polyurethane adhesive. This has sufficient viscosity and bonds well to the membrane material, but is not resistant to aromatic solvents or ketones. It can be seen that the specific $CO_2/N_2$ selectivity was only achieved once and that the membrane module leaked in four cases. This was caused by damage in the top layer of the membrane (caused by corrections during rolling up) and a poor sealing between the membrane envelope and permeate collecting tube.

A low-viscosity epoxy resin was used for the potted modules. This bonds sufficiently well and is resistant to practically all solvents. The specific selectivity was here achieved in four cases. In the case of the leaking module, too little moulding resin had been used, resulting in a leak in the membrane envelope when the feed spacer was opened.

With the potting method, a low-viscosity adhesive or moulding resin is used. This is not possible in the conventional method, so that a wider choice from chemically resistant types of adhesive is possible.

It was found from the experiments that it is easier to fabricate tight membrane modules with the potting method. Although more steps are needed to make a membrane module than for the conventional method, it is expected that this will not lead to a substantial increase in production costs for series production.

It is also possible to mould in the anti-telescoping means at the same time, which gives savings in the finishing of the module.

Various modifications of the invention will become apparent to those skilled in the art from the foregoing description and accompanying drawings. Such modifications are intended to fall within the scope of the appended claims.

## Claims

1. A process for the fabrication of a spirally wound membrane module consisting of a membrane envelope (i.e. two membranes enclosing a permeate spacer) which, together with a feed spacer, is spirally wound around a central permeate collecting tube, the envelope being closed by means of a glued edge, and the permeate spacer being wrapped one turn around the permeate collecting tube and laid on a flat surface, the membrane being folded around the feed spacer such that the selective layer rests on said spacer, this package subsequently being laid on the permeate spacer, the spacers and membrane being rolled up firmly, thereby producing a closed membrane envelope, characterized in that the feed spacer is provided at both edges with a strip of tape which is folded around said spacer or a subsequently removable filler, the envelope only being glued tight at the end, and the envelope finally being closed by potting the edges of the module.

2. The process as claimed in claim 1, characterized in that the strip of tape is about 3 cm wide.

3. The process as claimed in claim 1, characterized in that the feed spacer is impregnated along both edges over a width of about 3 cm with a subsequently removable filler.

4. The process as claimed in any one of claims 1-3, characterized in that the potting takes place by placing the module in a mould, which is filled with a suitable adhesive or resin which impregnates the membrane material and permeate spacer.

5. The process as claimed in claim 4, characterized in that after the adhesive has hardened, the mould is removed and a part of the bottom of the module is cut off, thereby opening the feed spacer.

6. The process as claimed in claim 5, characterized in that about 1 cm of the bottom of the module is cut off.

7. The process as claimed in any one of claims 1-6, characterized in that a low-viscosity adhesive or epoxy resin is used.

8. The process as claimed in claim 7, characterized in that a low-viscosity epoxy resin is used.

FIG.1

EP 0 443 642 A2

FIG.2a

FIG.2b

FIG.3a

FIG.3b

FIG.4a

FIG.4b

FIG.4c

FIG.4d